# FASCICULE DE BREVET EUROPEEN

(11) **EP 0 313 470 B1**
(45) Date de publication et mention de la délivrance du brevet: **10.03.1993**
(21) Numéro de dépôt: 88402664.2
(22) Date de dépôt: 21.10.1988
(51) Int. Cl.: H01H 35/00, G01D 5/04

(54) **Bielle à contact, pour commandes de vol d'aérodynes**
Kupplungsstange mit Kontakt für die Steuerung des Fluges eines Luftfahrzeuges
Tie rod with a contact for controlling the flight of aircraft

(30) Priorité: 23.10.1987 FR 8714725
(43) Date de publication de la demande: 26.04.1989
(73) Titulaire: AEROSPATIALE Société Nationale Industrielle, 75781 Paris Cédex 16 (FR)
(72) Inventeur: Aubry, Jacques Antoine, F-13480 Cabries (FR); Guillem, André, F-13700 Marignane (FR)
(74) Mandataire: Phélip, Bruno

(56) Documents cités:
- EP-A- 0 006 051
- EP-A- 0 194 672
- FR-A- 2 225 373
- US-A- 4 051 338

## Description

La présente invention a pour objet une bielle à contact, pour commandes de vol d'aérodynes, notamment d'hélicoptères, destinée à assurer la commande mécanique de l'actionnement d'au moins un contacteur électrique, au-delà d'un seuil dynamométrique de manoeuvre.

En d'autres termes, l'invention concerne une bielle à contact à seuil d'effort constituant des moyens mécaniques permettant, avec une grande sécurité, de commander l'établissement ou la rupture d'un contact électrique, au-dessus d'une certaine force appelée "seuil dynamométrique de manoeuvre", applicable indifféremment en traction ou en compression, ces moyens mécaniques comprenant notamment un détecteur dynamométrique à seuil actionnant au moins un organe de contact mobile de déclenchement d'un contacteur électrique, en général réalisé sous la forme d'un micro-contacteur ou micro-rupteur logé dans la bielle.

La bielle à contact selon la présente invention est notamment utilisable dans l'aéronautique, pour l'équipement des aérodynes, et en particulier des hélicoptères, et la description de la bielle à contact sera poursuivie, dans le présent mémoire, dans le cadre de cette dernière application, car il semble que ce soit celle pour laquelle l'invention présente le plus d'intérêt.

En particulier, la bielle à contact selon l'invention est destinée à être intercalée dans la chaîne des commandes de vol, entre un poste de pilotage et un pilote automatique, la bielle à contact ayant pour fonction de court-circuiter le pilote automatique, lors de la reprise en main du pilotage par un pilote, et réciproquement.

Un pilote automatique comprend un circuit électrique complexe dont d'ouverture, lors du passage du pilotage en mode automatique au pilotage en mode manuel, ou la fermeture, lors du passage du pilotage en mode manuel au pilotage en mode automatique, est déclenchée par l'intermédiaire d'un micro-contacteur ou micro-rupteur commuté par un déplacement d'une valeur précise d'un organe de commande actionné par le pilote, tel qu'un levier, après que ce pilote ait exercé un effort d'une valeur également très précise sur ledit organe de commande.

Par le brevet francais N° 2 434 377, on a déjà proposé une telle bielle à contact, qui a été montée sur les chaînes de commande de pas cyclique et de lacet de commandes de vol d'hélicoptères de moyens tonnages.

Une telle bielle connue comprend deux éléments essentiels mobiles l'un par rapport à l'autre, dont l'un est un corps de bielle et l'autre une tige de bielle, partiellement engagée et montée coulissante dans le corps de bielle, et dont les extrémités qui constituent les extrémités opposées de la bielle doivent être reliées, par l'intermédiaire d'embouts à rotule ou de chapes, d'une part, au poste de pilotage, et, d'autre part, à un point fixe de l'aérodyne, tandis que le micro-contacteur électrique sert à ouvrir ou à fermer le circuit électrique du pilote automatique.

L'agencement interne de cette bielle est tel qu'il n'autorise aucun déplacement relatif entre le corps et la tige de bielle, tant que la force de manoeuvre exercée sur les extrémités opposées de la bielle n'a pas atteint et dépassé une valeur prédéterminée, à savoir le seuil dynamométrique de manoeuvre. Cette bielle à contact maintient ainsi un jeu nul entre la tige et le corps de bielle, tant que la sollicitation axiale de la bielle est inférieure à la valeur de seuil prédéterminé, puis la bielle permet une course d'amplitude contrôlée de la tige de bielle par rapport au corps pour n'actionner le contacteur électrique qu'après le dépassement du seuil.

Dans cette bielle à contact connu, le corps de bielle a sensiblement la forme d'un manchon cylindrique présentant un évidement axial cylindrique et symétrique, à deux niveaux, dont une partie centrale forme un palier de plus grand diamètre se raccordant par des épaulement radiaux à deux parties latérales formant des paliers de plus petit diamètre. Dans le palier central est logée une couronne solidaire de la tige de bielle et entourée, pour supprimer tout jeu radial, d'une autre couronne périphérique et concentrique, tandis que deux autres couronnes sont disposées de part et d'autre de celle solidaire de la tige et sont ajustées axialement sur cette dernière au montage, afin de constituer des butées mobiles limitant les déplacements axiaux de la tige dans le corps par la venue en contact avec des butées fixes du corps, constituées par les épaulements internes et radiaux raccordant, dans le corps, le palier central de plus grand diamètre aux deux paliers latéraux de plus petit diamètre. Deux ressorts hélicoïdaux identiques et précontraints prennent appui contre d'autres butées internes du corps et exercent leurs effets antagonistes de part et d'autre de l'empilement axial des couronnes solidaires en translation de la tige de bielle et logé dans la partie centrale de plus grand diamètre de l'évidement interne du corps, avec un jeu axial correspondant d'un côté à la course autorisée en compression et de l'autre côté à la course autorisée en traction. Les deux ressorts antagonistes et précontraints, travaillant tous deux en compression, forment ainsi un détecteur de dépassement du seuil dynamométrique de manoeuvre, lequel correspond à la charge de précontraînte de chacun des ressorts, et un tel montage empêche tout déplacement axial de la tige par rapport au corps de bielle chaque fois que l'on applique à la bielle une force de traction ou une force de compression dont la valeur est inférieure à la valeur de précontraînte des ressorts, la tige de bielle se déplaçant par contre sur la faible course autorisée en traction ou en compression, à partir de sa position d'équilibre définie par les ressorts, après que la charge subie par la bielle en traction ou en compression a dépassé le seuil de précontrainte des ressorts.

Le contacteur électrique, en général un micro-contact à rupture brusque, est logé dans le corps et solidaire de ce dernier, et ce contacteur est actionné par la tige de bielle, par l'intermédiaire d'un dispositif d'amplification mécanique de la course de la tige par rapport au corps. Cet amplificateur mécanique est indispensable du fait que la course d'actionnement prédéterminée, qu'il est nécessaire de donner à l'organe de contact mobile du contacteur électrique, afin de commuter ce dernier, et à partir du mouvement de la tige par rapport au corps de bielle, est très supérieure (dans un rapport supérieur à 5) à la très faible course imposée tant en compression qu'en traction, à la tige dans le corps de bielle. Simultanément, l'amplificateur mécanique de course ou de déplacement axial de la tige par rapport au corps de bielle doit, bien entendu, amplifier cette course dans les deux sens de fonctionnement en traction et en compression, présenter de plus un jeu et un hystérésis pratiquement nul, être insensible aux jeux radiaux entre la tige et le corps de bielle, ainsi qu'aux variations de température, dans une large plage s'étendant par exemple de - 80°C à + 100°C.

Afin de satisfaire à ces différentes exigences, la bielle décrite dans le brevet français précité est équipée d'un amplificateur mécanique de course comportant au moins une pince ou levier amplificateur, mais de préférence deux pinces ou leviers opposés dont chacun est disposé sensiblement axialement dans le corps, en position latéralement excentrée par rapport à l'axe de la bielle à contact, et pivote autour d'un axe de pivot solidaire du corps de bielle. D'un côté de son pivot, chaque pince ou levier présente, du côté du bout de la tige engagée dans le corps, un bras dans l'extrémité libre duquel une encoche à deux pentes inversées a été ménagée, en regard d'une gorge également à deux pentes inversées et ménagée autour du bout de la tige interne au corps. De plus, une bille est enserrée entre, d'une part, les deux pentes inversées de la gorge présentée par la tige et, d'autre part, les deux pentes inversées de l'encoche de l'extrémité de la pince ou du levier en forme de col de cygne, qui se prolonge, de l'autre côté de son pivot sur le corps, par un second bras accouplé à l'organe de contact mobile du contacteur électrique afin de l'actionner. Dans le cas où l'amplificateur mécanique ne comporte qu'un seul levier ou une seule pince, le contacteur électrique est directement fixé sur le corps de bielle, tandis que dans le cas où l'amplificateur mécanique comprend deux pinces ou leviers en opposition, le contacteur électrique est fixé sur le second bras du levier qui n'actionne pas l'organe de contact mobile du contacteur. Dans les deux modes de réalisation, tout déplacement axial, en traction ou en compression, de la tige par rapport au corps de bielle, se transforme en un déplacement radial de la ou des billes, qui repousse(nt) le ou les leviers, lequel ou lesquels pivote(nt) toujours dans le même sens pour chaque levier, mais dans des sens opposés d'un levier par rapport à l'autre, lorsque l'amplificateur comprend deux leviers symétriquement opposés, de sorte que la petite course axiale de la tige dans le corps est ainsi transformée en une course radiale, d'amplitude bien supérieure, qui est transmise à l'organe de contact mobile du contacteur et suffisante pour actionner ce dernier. Afin de s'affranchir des tolérances de fabrication des pièces, notamment de l'amplificateur, qui sont liées au corps de bielle, et afin de régler convenablement le fonctionnement de l'amplificateur de course, des moyens sont de plus prévus pour permettre le réglage radial de la position des pivots du ou des leviers de cet amplificateur. Ceci est assuré au moyen d'un plaque mobile, supportant les pivots, et dont la solidarisation au corps est assurée au moyen de vis ou d'organes filetés équivalents, traversant des lumières convenablement orientées et ménagées dans la plaque de support des pivots.

Bien qu'une telle bielle à contact satisfasse aux différentes exigences présentées ci-dessus, elle présente néanmoins des inconvénients importants, car elle comporte un grand nombre de pièces, sans réglage précis, tant au niveau du détecteur à ressorts de dépassement du seuil dynamométrique de manoeuvre qu'au niveau de l'amplificateur mécanique de course, elle ne peut être obtenue simplement, et sa fiabilité est discutable du fait qu'elle comporte un grand nombre de pièces dont l'usure est notable en service. Il en résulte que les coûts de fabrication et de maintenance d'une telle bielle à contact sont élevés.

Au titre de l'état de la technique, il faut également mentionner le brevet des Etats-Unis d'Amérique N° 3 902 379, qui décrit une bielle à désaccouplement rapide, montée dans la tringlerie d'un double commande de vol, entre un poste de pilotage principal, occupé par un élève pilote, et un poste de pilotage auxiliaire, occupé par un moniteur, la bielle à désaccouplement rapide devant permettre au moniteur d'assurer, à distance, la mise en action des commandes de vol à partir du poste de pilotage auxiliaire, et le découplage entre les commandes de vol principales, manoeuvrées par l'élève pilote, et les gouvernes et autres organes commandés de l'aéronef, en cas d'urgence. La bielle comprend un corps cylindrique dans lequel une tige est engagée et immobilisée en position initiale par un mécanisme de verrouillage à billes, dont les billes sont retenues dans une cage solidaire de l'extrémité de la tige et font saillie dans des évidements internes du cylindre, sous la poussée d'une came centrale à l'extrémité d'un axe monté axialement coulissant dans la tige, la came étant maintenue en position de verrouillage par un ressort. Un actionneur électromagnétique, pneumatique ou hydraulique, commandé par le moniteur, permet de déplacer radialement un coin, dont la surface inclinée sur l'axe de la bielle est en contact avec une surface conique d'une butée portée par l'axe coulissant dans la tige, à l'extrémité opposée à celle présentant la butée. Le déplacement radial du coin par l'actionneur entraîne un déplacement axial de l'axe portant la butée, à l'encontre du ressort, ce qui a pour effet de provoquer un déplacement radial des billes jusqu'à une position de déverrouillage, autorisant un libre coulissement de la tige de bielle dans le corps de celle-ci. Il en résulte que les mouvements de commande appliqués à la tige de bielle par l'élève pilote ne sont plus transmis au reste de la chaîne des commandes de vol, et sont sans action sur les organes gouvernés.

Une telle bielle à désaccouplement rapide n'est donc pas du type de la bielle à contact faisant l'objet de l'invention, car elle ne comporte aucun amplificateur de course, et surtout, ce ne sont pas les mouvements axiaux relatifs d'une tige et d'un corps qui permettent l'actionnement d'un contacteur électrique, mais la manoeuvre d'un tel contacteur, pour commander le fonctionnement d'un actionneur électromagnétique, hydraulique ou pneumatique, qui libère un dispositif de verrouillage bloquant initialement la tige et le corps de bielle dans une position axiale prédéterminée, afin d'autoriser leur libre coulissement relatif.

Par ailleurs, on connaît par le brevet français 2 570 672 un double système de commandes automatiques de compensateur et de puissance, pour l'équipement des avions, et qui comprend, sur une chaîne de commandes de vol entre une commande pilote et une gouverne, un capteur-comparateur de force à fonctionnement automatique et à inverseur unipolaire à point milieu intégré, ce dispositif étant destiné à supprimer la recherche du point d'équilibre d'une gouverne. Ce dispositif comprend essentiellement un cylindre, relié par une extrémité à une commande pilote et fermé à son autre extrémité par un couvercle, et un piston à double effet est monté coulissant axialement dans ce cylindre, dans lequel le piston est soumis aux actions antagonistes de deux ressorts de compression identiques et précontraints. La course axiale du piston est limitée par deux butées constituées par des rondelles métalliques connectées à des conducteurs électriques d'alimentation d'un micro-moteur de commande du compensateur de la gouverne. Le piston est solidaire d'une tige de transmission de force, qui traverse radialement deux lumières axiales diamètralement opposées ménagées dans le cylindre, et qui est solidaire des deux branches d'une fourche de commande, reliée à la gouverne, ces deux branches étant montées coulissantes axialement dans des méplats du couvercle, mais solidaires en rotation de ce dernier. Lorsque la charge axiale subie par ce dispositif, tant en compression qu'en traction, dépasse le seuil de précontrainte des ressorts, le piston est déplacé à partir de sa position d'équilibre jusqu'à venir en contact avec l'une des deux butées, et ainsi à établir un contact électrique permettant l'alimentation du micro-moteur de commande du compensateur, de façon à faire pivoter la gouverne dans le sens qui la ramène dans sa position d'équilibre aérodynamique.

Ce dispositif présente donc une certaine similitude avec la bielle à contact décrite dans le brevet français 2 434 377, dans la mesure où c'est bien le déplacement axial relatif d'une tige et d'un corps, au-delà d'un seuil d'effort prédéterminé, qui commande l'établissement d'un contact électrique. Cependant, ce dispositif n'assure aucune amplification de course, de sorte qu'il ne peut pas être utilisé de manière satisfaisante dans les applications envisagées.

Il en est de même du dispositif de sécurité à contacteur décrit dans le brevet français 1 131 880 ainsi que dans sa seconde addition N° 70 535, qui concernent un système composite de commande manuelle et automatique pour avions. Ce système de commande composite est un système électro-hydraulique et mécano-hydraulique, capable d'assurer la commande d'un servo-moteur hydraulique d'actionnement d'une gouverne suivant l'un ou l'autre de deux modes de fonctionnement, dont l'un assure une commande par voie électro-hydraulique à partir d'un signal de commande électrique, produit soit par la manoeuvre d'un organe de commande manuelle, soit par un pilote automatique, tandis que l'autre assure une commande par voie mécano-hydraulique uniquement à partir de l'organe de commande manuelle. Dans un tel système, le dispositif de sécurité à contacteur est simultanément agencé en accouplement cédant élastiquement, réalisé de manière à assurer normalement une transmission sans flexibilité quelles que soient les forces nécessaires pour assurer le déplacement de l'organe de commande manuelle correspondant au déplacement de la gouverne, mais à céder élastiquement dans le cas de l'application de forces exceptionnelles à cet organe de commande manuelle, par exemple dans le cas où une force suffisante lui est appliquée par le pilote, et des organes commutateurs sont prévus de manière à être actionnés lorsque cet accouplement cède élastiquement d'une amplitude dépassant une valeur prédéterminée. L'accouplement-contacteur de ce système comprend deux éléments, dont l'un est relié à la sortie du servo-moteur d'actionnement de la gouverne tandis que l'autre est relié au levier de commande manuelle. Les tringleries de liaison aux deux éléments, au niveau de l'accouplement-contacteur, sont sensiblement coaxiales et l'agencement est tel que le déplacement axial de l'un des éléments assure le déplacement axial de l'autre élément, malgré un ressort soumis à une charge préalable et disposé entre deux butées écartées l'une de l'autre et disposées dans un logement annulaire de l'un de éléments, en pouvant se déplacer librement dans le sens axial sur un prolongement de l'autre élément. Les contacts du contacteur sont alors ouverts s'il se produit, entre les deux éléments de base du dispositif, en déplacement axial relatif qui dépasse une amplitude déterminée, c'est-à-dire si le ressort subit l'effet d'une surcharge. A titre d'exemple, l'un des éléments peut porter une paire de pistons, de manière telle que le ressort sollicite ces pistons vers des positions fixes sur l'élément par lequel chacun d'eux est déplacé élastiquement, quand la force qui lui est transmise à partir de la butée correspondante d'une paire de butées prévues sur l'autre élément dépasse la force du poussée du ressort. Dans le système faisant l'objet du brevet français 1 131 880, un seul accouplement-contacteur est utilisé et monté entre une bielle reliée par un différentiel mécanique à la gouverne ou à la sortie du servo-moteur d'actionnement de cette gourverne, et, de l'autre côté, à un levier pivotant, lui-même actionné par le levier de commande manuelle. Dans la seconde addition N° 70 535 au brevet précité, le système comporte deux accouplements-contacteurs, fléchissant élastiquement pour des seuils d'efforts différents, dont l'un est interposé dans la liaison mécanique entre l'organe de commande manuelle et un dispostif de sensation artificielle, tandis que l'autre est interposé dans la timonerie entre le dispositif de sensation artificielle et le servo-moteur d'actionnement de la gouverne ou ladite gouverne. L'ouverture des contacts de ces accouplements-contacteurs ouvre un circuit électrique qui est réalisé de manière à provoquer une inversion du système, afin de l'amener à un mode de travail mécanico-hydraulique à partir du mode de travail par voie électro-hydraulique. Mais, dans ces différentes réalisations, il n'est prévu aucune amplification de la course axiale de l'un des éléments pour actionner le contacteur correspondant.

L'invention a donc pour objet de proposer une bielle à contact du type de celle décrite dans le brevet français N° 2 434 377, dont elle remplit toutes les fonctions essentielles, mais dont la structure est perfectionnée afin d'être considérablement simplifiée, d'un réglage également simplifié, et d'une fiabilité accrue, et également, par conséquence d'un coût de fabrication de d'entretien considérablement réduit.

A cet effet, l'invention propose une bielle à contact, pour commandes de vol d'aérodynes, notamment d'hélicoptères, destinée à assurer la commande mécanique de l'actionnement d'au moins un contacteur électrique, au delà d'un seuil dynamométrique de manoeuvre, et comprenant:
un corps de bielle, comportant une partie essentiellement tubulaire, et dont une extrémité présente des moyens de liaison et d'articulation à un support,
au moins un contacteur électrique logé dans le corps de bielle et muni d'au moins un organe de contact mobile à course d'actionnement déterminée,
une tige de bielle, déplaçable axialement par rapport au corps par une partie de tige qui est engagée et montée coulissante dans ladite partie tubulaire du corps, sur une course axiale inférieure à la course d'actionnement de l'organe de contact mobile du contacteur et délimitée entre deux butées mécaniques du corps, l'extrémité de la tige externe au corps présentant également des moyens de liaison et d'articulation à un support,
un détecteur de dépassement du seuil dynamométrique de manoeuvre, qui comporte, dans le corps de bielle, au moins un ressort précontraint sollicitant élastiquement la tige et n'autorisant le déplacement de la tige par rapport au corps que lorsque la tige est soumise, à l'encontre du ressort, à une sollicitation dont la composante axiale en traction ou en compression dépasse ledit seuil, et
un amplificateur mécanique de la course de la tige par rapport au corps, ledit amplificateur étant actionné par la tige et actionnant lui-même ledit organe de contact mobile du contacteur sur une course au moins égale à ladite course d'actionnement déterminée, lorsque la tige est déplacée par rapport au corps sur toute sa course en traction ou en compression, afin d'actionner le contacteur électrique, et, selon l'invention, une telle bielle à contact se caractérise en ce qu'un organe constitue simultanément l'amplificateur de course et le détecteur de dépassement du seuil dynamométrique de manoeuvre, cet organe étant un ressort à lame travaillant en flambage de compression, et dont chacune des deux extrémités prend appui contre un support de ressort, qui est monté coulissant axialement vis-à-vis, d'une part, du corps de bielle et, d'autre part, de la tige de bielle, et qui est repoussé par le ressort à lame précontraint en compression directement ou indirectement contre l'une au moins de deux butées, dont l'une est une butée du corps et l'autre une butée de la tige, de sorte que tout déplacement axial de la tige par rapport au corps, en compression ou en traction, provoque une compression du ressort à lame entre un support de ressort en appui contre une butée du corps et l'autre support de ressort en appui contre une butée de la tige.

On réduit ainsi le nombre de pièces, ainsi que toute possibilité de jeu axial, entre d'une part, l'amplificateur, et, d'autre part, le détecteur de dépassement, par le fait que ces deux dispositifs sont simultanément constitués par un unique ressort précontraint, qui, selon un mode de réalisation simultanément simple et assurant un grand rapport d'amplification est un ressort à lame travaillant en flambage de compression. On comprend que, dans une telle réalisation, un unique ressort à lame, relativement peu encombrant, remplace les deux ressorts de compression hélicoïdaux et antagonistes utilisés dans les bielles à contact de l'état de la technique, ainsi également que l'amplificateur mécanique à une ou deux pinces en col de cygne prévu sur la bielle à contact du brevet français 2 434 377, et également tous les organes de liaison entre, d'une part, le détecteur de dépassement de seuil, et, d'autre part, l'amplificateur de course axiale. De plus, pour réduire encore le nombre de pièces et éliminer les jeux mécaniques dus aux transmissions d'efforts et/ou de mouvements, l'organe de contact mobile du contacteur est avantageusement directement en contact avec la partie centrale du ressort à lame et actionné par cette partie centrale.

Dans un exemple de réalisation simple et pratique, assurant à la fois un appui franc des extrémités du ressort sur les supports correspondants présentant un frottement réduit, et un bon guidage en translation axiale des supports de ressorts, chacun de ces derniers comprend une partie munie d'une encoche en V dans laquelle est engagée et prend appui l'extrémité correspondante du ressort à lame, et qui est solidaire en translation axiale d'au moins une aile transversale s'étendant sensiblement radialement par rapport à la partie munie de l'encoche, en formant une butée mobile coopérant avec les butées correspondantes du corps et de la tige pour respectivement limiter le déplacement du support de ressort correspondant dans le corps ou pour le déplacer avec la tige dans le corps.

Afin d'obtenir un grand rapport d'amplification de course, et simultanément d'augmenter la compacité de l'ensemble, le ressort à lame est avantageusement logé sensiblement axialement dans un évidement ménagé dans la partie de tige montée coulissante dans le corps de bielle. En outre, l'évidement de la tige est avantageusement ménagé dans une portion de plus grande section transversale, qui est délimitée axialement entre deux épaulements radiaux de la tige, et qui coulisse dans un logement interne à ladite partie tubulaire du corps et délimité axialement entre deux épaulements radiaux et internes du corps, qui constituent les butées mécaniques du corps limitant les déplacements axiaux de la tige par rapport au corps, par contact avec lesdits épaulements de la tige. Dans une telle réalisation, il est alors avantageux que chaque support de ressort soit guidé à coulissement axial dans l'une respectivement des deux parties d'extrémité axiale de l'évidement de la tige.

Avantageusement, lorsque chaque support de ressort comprend une partie munie d'une encoche pour la réception d'une extrémité du ressort à lame et au moins une aile radiale, l'évidement de la tige est réalisé de sorte qu'il s'étende transversalement dans la tige et qu'il débouche radialement dans le logement du corps par au moins une lumière allongée en direction axiale, et de préférence par deux lumières opposées de part et d'autre de l'axe de la bielle, chaque support de ressort étant solidaire en translation axiale d'au moins une aile radiale, mais de préférence de deux ailes radiales opposées, dont l'extrémité radiale externe fait saillie au-delà d'une lumière correspondante, dans le logement du corps, pour former la butée mobile correspondante, coopérant avec un autre épaulement interne au corps, ou une cale d'épaisseur ajustée en appui contre cet autre épaulement, formant la butée correspondante du corps pour limiter le déplacement du support de ressort, tandis que l'une au moins des extrémités axiales de l'évidement forme la butée correspondante de la tige, qui coopère avec ladite butée mobile pour l'entraînement du support de ressort avec la tige dans le corps.

Dans un exemple avantageusement simple de réalisation, les épaulements radiaux et internes du corps qui constituent les butées du corps limitant les déplacements respectivement de la tige et, avec interposition éventuelle d'une cale d'épaisseur ajustée, d'un support de ressort vers l'extérieur du corps, du côté des moyens de liaison et d'articulation de la tige, sont formés par des épaulements en gradin dans un bouchon annulaire d'arrêt et de fermeture d'une extrémité axiale d'un cylindre du corps, qui constitue l'essentiel de la partie tubulaire du corps de bielle.

De plus, le support de ressort, solidaire en translation axiale de la butée mobile coopèrant avec une butée de tige formée par une extrémité axiale de l'évidement, est avantageusement et simplement guidé en translation axiale par rapport à la tige par au moins une goupille élastique de positionnement, qui est solidaire de ce support de ressort et de préférence de sa partie centrale munie de l'encoche en V correspondante, cette goupille étant logée et montée coulissante axialement dans un alésage axial percé dans la tige.

Selon une structure simplifiée, ce support de ressort a sa partie munie d'une encoche en V qui est centrale et d'une seule pièce avec deux ailes transversales opposées, avec lesquelles la partie munie d'une encoche délimite un petit alésage axial dans lequel est logée une extrémité de la goupille élastique.

En outre, pour permettre le réglage du seuil dynamométrique de manoeuvre du détecteur de dépassement de seuil, c'est-à-dire le seuil de compression du ressort à lame précontraint, il est avantageux que la bielle à contact selon l'invention comprenne des moyens de réglage de la précontrainte du ressort à lame, ces moyens de réglage assurant un positionnement axial réglable de l'un au moins des supports de ressort par rapport à la tige.

Dans un mode préféré de réalisation, ces moyens de réglage comprennent au moins un premier organe qui est fileté et vissé en position réglable axialement par rapport à la tige, et au moins un second organe, qui est déplacé axialement par un premier organe fileté et qui présente, d'une part, une portion axiale sur laquelle un support de ressort est monté axialement coulissant, et, d'autre part, une butée d'appui dudit support de ressort, cette butée d'appui constituant la butée de la tige vers laquelle le ressort repousse le support de ressort correspondant.

Dans un exemple de structure avantageusement simple des moyens de réglage de la précontrainte du ressort à lame, l'organe fileté est une vis dont la tige filetée est vissée dans un écrou de réglage, disposé dans une partie d'extrémité axiale de l'évidement de la tige de bielle, et dont la tête de vis est logée dans le fond d'un alésage axial traversant un manchon prolongeant axialement la partie de tige de bielle montée coulissante dans le corps, la tête de vis étant accessible de l'extérieur de la bielle par l'intérieur de ce manchon, pour être entraînée en rotation dans l'un ou l'autre sens afin de régler sa position axiale par rapport à la tige de bielle, et le second organe des moyens de réglage est constitué par une portion d'extrémité sensiblement cylindrique et de section transversale réduite de la tige de vis, qui fait saillie axialement dans l'évidement de la tige de bielle, et qui forme la portion axiale engagée à coulissement dans un alésage du support de ressort; la butée d'appui est dans ce cas formée par la face d'extrémité libre de la portion d'extrémité de section réduite ou par un épaulement de raccordement de cette portion d'extrémité de section réduite au reste de la tige de vis, de sorte que le ressort à lame repousse le support contre la butée d'appui, ce qui repousse axialement la vis dans un sens repoussant l'écrou de réglage vers ou contre l'extrémité axiale correspondante de l'évidement de la tige de bielle, l'écrou comportant deux ailes transversales opposées, faisant saille radialement hors de l'évidement de la tige de bielle et dans le logement du corps de bielle, afin d'être repoussées vers ou contre la butée correspondante du corps, limitant d'un côté les déplacements du support de ressort correspondant, ou une cale d'épaisseur ajustée appliquée contre cette butée du corps.

Avantageusement, dans ce cas, pour que la bielle à contact soit de longueur réglable, la tige de bielle comprend également un embout, fileté sur une partie d'extrémité qui est engagée et vissée, en position axiale réglable, dans le manchon, et dont l'autre partie d'extrémité est en saillie hors du corps de bielle et porte les moyens de liaison et d'accouplement de la tige de bielle.

Afin de diminuer l'encombrement, en particulier radial, de la bielle à contact, le contacteur électrique peut être logé dans l'évidement de la tige et fixé à cette dernière. Dans ce cas, afin d'améliorer la compacité de l'ensemble et d'assurer une meilleure coopération entre le ressort à lame et le contacteur électrique, l'organe de contact mobile à course d'actionnement déterminée du contacteur est un organe en contact contre la face concave du ressort à lame et supporté, en position radiale réglable, par un levier d'actionnement, s'étendant sensiblement axialement dans l'évidement, et monté pivotant sur le contacteur.

La présente invention sera mieux comprise, et d'autres avantages et caractéristiques de l'invention apparaîtront, à la lecture de la description donnée ci-dessous, à titre non limitatif, d'un exemple particulier de réalisation, décrit en référence aux dessins annexés sur lesquels:
la figure 1 représente une coupe longitudinale et axiale d'une bielle à contact dans un plan perpendiculaire au plan du ressort à lame, ce dernier étant précontraint entre les deux appuis à ses extrémités.
la figure 2 représente une vue en partie en élévation latérale et en partie en coupe de la bielle à contact de la figure 1, telle qu'observée depuis la gauche sur cette figure 1 et en coupe par un plan perpendiculaire à celui de la figure 1, et
la figure 3 est une vue en coupe selon III-III de la figure 1.

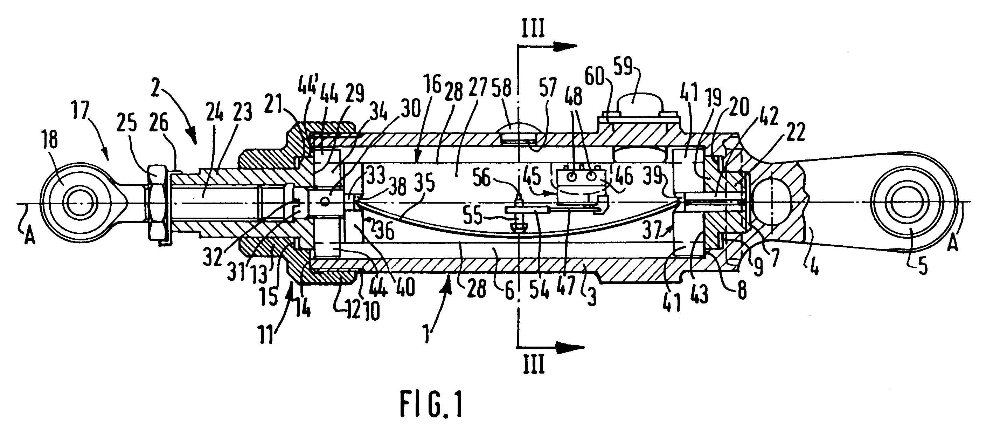

La bielle à contact représentée sur les figures 1 à 3 comprend deux sous-ensembles mécaniques principaux, qui sont un corps de bielle tubulaire 1 et une tige ou coulisseau de bielle 2, laquelle tige est partiellement engagée coaxialement dans le corps 1 et montée coulissante axialement vis-à-vis de ce corps 1 sur une faible course, tant en traction (dans un sens tendant à faire sortir la tige 2 du corps 1) qu'en compression (dans le sens opposé, tendant à faire entrer la tige 2 dans le corps 1).

Le corps 1 est constitué d'un cylindre 3, fermé à une extrémité 4 qui est axialement prolongée et conformée en embout à rotule 5, pour assurer une liaison articulée du corps de bielle 1 à la timonerie de commande de l'aérodyne en amont des organes du pilote automatique.

Sur la majeure partie de sa longueur, le cylindre 3 délimite un logement constitué d'un alésage axial principal 6, le plus grand diamètre, qui se raccorde, du côté de l'embout à rotule 5, à un contre-alésage coaxial d'extrémité 7, de plus petit diamètre, par deux épaulements intérieurs en gradin, dont l'un est un épaulement radial en position externe 8 et l'autre un épaulement radial en position interne 9. L'autre extrémité ouverte du cylindre 3 présente un filetage extérieur 10 et est fermée par un bouchon d'arrêt annulaire et amovible 11. Ce bouchon 11 présente une partie d'extrémité axiale en forme de collet cylindrique taraudé 12, par lequel le bouchon 11 se visse extérieurement sur le filetage 10 du corps 1, et l'autre extrémité cylindrique et axiale 13 du bouchon 11 est traversée par un alésage axial, coaxial à l'alésage 6 et au contre-alésage 7 du corps 1. De plus, la face interne du collet 12 se raccorde à la surface de l'alésage de l'extrémité cylindrique 13 par deux épaulements intérieurs en gradin, dont l'un est un épaulement radial en position externe 14, et l'autre un épaulement radial en position interne 15, sensiblement de même section annulaire que l'épaulement radial interne 9 au fond de l'alésage principal 6 du corps 1 et directement et axialement en regard de cet épaulement 9. L'épaulement radial externe 14 du couvercle 11 présente une partie annulaire externe qui fait butée radiale limitant l'enfoncement du bouchon 11 sur le cylindre 3 lors du vissage, à la mise en place du bouchon 11 sur ce cylindre 3, et la partie annulaire restante ou partie annulaire interne de l'épaulement 14 forme, après la mise en place du bouchon 11 sur le cylindre 3, un épaulement directement et axialement en regard de l'épaulement 8 au fond du cylindre 3, et sensiblement de même section que cet épaulement 8.

Le coulisseau ou tige de bielle 2 est constitué d'un partie principale 16, essentiellement engagée dans le corps 1, et d'un embout 17, monté amovible sur la partie 16 et équipé d'une rotule 18, pour assurer une liaison articulée du coulisseau 2 à une timonerie de commande (non représenté) manoeuvrée par le pilote. La partie principale 16 du coulisseau 2 comporte une portion centrale 19, de plus grande section transversale ou radiale (perpendiculairement à l'axe commun A au corps 1 et au coulisseau 2) qui est délimitée axialement entre deux épaulements radiaux 20 et 21 ménagés sur la partie 16 et raccordant, sur cette dernière, la portion centrale 19 respectivement à une petite portion d'extrémité axiale 22, de plus petite section transversale, inférieure à celle du contre-alésage borgne 7 au fond du corps 1, et à un manchon coaxial 23, à l'extrémité axiale opposée, ce manchon 23 ayant une section transversale légèrement inférieure à celle de l'alésage de l'extrémité cylindrique 13 du bouchon 11. De plus, la distance axiale séparant les deux épaulements radiaux 20 et 21 sur le coulisseau 2 est égale à la distance axiale séparant les épaulements radiaux 9 et 15 sur le corps 1 diminuée de la somme des courses du coulisseau 2 en traction et en compression dans le corps 1, à partir de la position d'équilibre du coulisseau 2 vis-à-vis du corps 1 sous l'effet de la sollicitation d'un ressort, comme décrit ci-dessous. Dans cet exemple, comme la course maximale en traction et la course maximale en compression doivent chacune par construction être égales à 0,15 mm, la distance axiale séparant les deux épaulements 20 et 21 sur le coulisseau est inférieure de 0,3 mm à la distance axiale séparant l'un de l'autre les deux épaulements 9 et 15 du corps 1. En outre, la section transversale de la portion centrale 19 est légèrement inférieure à celle des deux alésages axiaux, de dimension axiale supérieure à la course totale du coulisseau 2 dans le corps 1, et qui sont délimités dans le corps 1 l'un entre les épaulements 8 et 9, et l'autre entre les épaulements 14 et 15 du corps 1.

Il en résulte que la tige ou coulisseau 2 est montée coulissante axialement dans le corps 1 par sa partie principale 16, dont la portion centrale 19 est logée dans le logement interne 6 du corps 1 et est mobile en translation dans ce logement 6, en étant guidée axialement par ses extrémités qui coulissent sans jeu radial notable dans les alésages délimités entre les épaulements 8 et 9 et 14 et 15 du corps 1, la course axiale de la tige 2 étant limitée par la venue en contact des butées formées sur la tige 2 par les épaulements 20 et 21 contre les butées formées sur le corps 1 par les épaulements 9 et 15. Simultanément, la tige 2 est guidée axialement dans ses déplacements par rapport au corps 1 par sa petite portion d'extrémité axiale 22, qui est engagée et coulisse axialement dans le contre-alésage 7 au fond du corps 1, et par son manchon 23 qui traverse le bouchon 11 et coulisse axialement sans jeu radial notable dans l'alésage central de ce bouchon 11.

La rotule 18 de l'embout amovible 17 est retenue dans une tête élargie que cet embout 17 comporte à l'extrémité, libre et externe au corps 1 et au manchon 23, d'une tige dont la partie filetée 24 est vissée en position axiale réglable dans l'alésage axial central et taraudé du manchon 23 qui débouche dans l'extrémité libre de ce manchon 23, du côté opposé au corps 1. Le blocage de l'embout 17 en position axiale souhaîtée par rapport au manchon 23 de la tige 2 est assuré par un contre-écrou 25, vissé sur la tige filetée 24 et serré contre un frein d'écrou 26, interposé entre le contre-écrou 25 et le manchon.

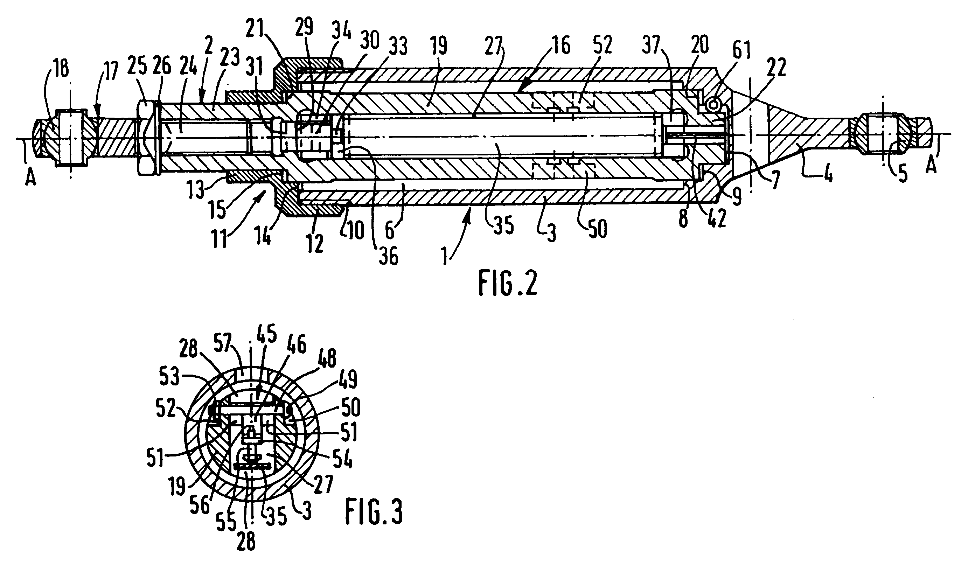

Un évidement 27 est ménagé dans la portion 19 du coulisseau 2, et cet évidement 27 s'étend axialement sur la majeure partie de la longueur de cette portion 19. Transversalement, et selon une première direction perpendiculaire à l'axe A de la bielle, l'évidement 27 s'étend diamètralement au-travers de toute la portion de tige 19 (voir figure 1) et symétriquement par rapport au plan diamétral correspondant, tandis que la largeur de l'évidement 27, selon la seconde direction transversale, perpendiculaire à la fois à l'axe A et à la première direction transversale (voir figure 2) est limitée à une valeur très inférieure à sa longueur axiale. L'évidement 27 ainsi formé dans la portion 19 de la tige 2 est un évidement allongé, relativement étroit, et qui débouche dans le logement 6 interne au corps 1 par deux lumières axiales 28 s'ouvrant dans des parties diamétralement opposées de la portion de tige 19.

Cet évidement 27 est limité, du côté du manchon 23, par une face d'extrémité axiale 29 dans laquelle s'ouvre coaxialement un petit contre-alésage lisse, percé au travers du fond du manchon 23 et de l'extrémité axiale adjacente de la portion de tige 19, et ce petit contre-alésage débouche dans le fond de l'alésage taraudé du manchon 23. Dans ce contre-alésage lisse est logée la tête 31 d'une vis 30, dont la tige filetée est vissée dans un écrou 34, logé et monté coulissant axialement vis-à-vis de la tige 2 et du corps 1 dans la partie d'extrémité axiale adjacente du logement 27. La tête 31 de la vis 30 présente une fente diamétrale de manoeuvre 32, dans sa face tournée vers l'embout 17, de sorte que, lorsque cet embout est dévissé et retiré du manchon 23, la tête de vis 31 est accessible de l'extérieur de la bielle, à l'aide d'un tournevis introduit dans le manchon 23 et permettant d'entraîner la tête de vis 31 en rotation dans un sens ou dans l'autre, afin de régler la position axiale de la vis 30 par rapport à l'écrou 34, lequel est élastiquement repoussé vers ou contre la face d'extrémité 29 de l'évidement 27, par un ressort décrit ci-dessous. La tige filetée de la vis 30 fait saillie au-delà de l'écrou 34 dans l'évidement 27, et se prolonge axialement par une portion d'extrémité amincie 33, sensiblement cylindrique et de section transversale réduite par rapport au reste de la vis 30. Cette portion d'extrémité amincie 33, qui se raccorde au reste de la vis 30 par un épaulement radial, est ainsi entièrement en saillie dans l'évidement 27, au-delà de l'écrou 34, dans une position axialement réglable par le vissage ou le dévissage de la vis 30 par rapport à l'écrou 34.

Un ressort à lame 35 est logé sensiblement axialement dans l'évidement 27, et ce ressort 35 est précontraint en compression et travaille en flambage entre deux supports de ressort 36 et 37, qui sont chacun montés coulissants axialement vis-à-vis de la tige 2 et du corps 1, dans l'une respectivement des parties d'extrémité axiale de l'évidement 27 et dans la partie d'extrémité axiale correspondante du logement 6 du corps 1. Chacune des deux extrémités du ressort à lame 35, de forme avantageusement hémi-cylindrique, est engagée dans une encoche en V, jusqu'à venir en butée contre les flancs de cette encoche, qui s'ouvre vers le milieu de l'évidement 27 et est ménagée dans une partie centrale 38 ou 39 du support correspondant 36 ou 37.

Du côté de l'écrou 34 et de la vis 30, le support 36 comprend, de part et d'autre de sa partie centrale à encoche 38 centrée sur l'axe A, deux ailes radiales opposées 40, s'étendant transversalement jusqu'aux lumières 28, sans faire saillie dans le logement 6 du corps 1. Ces deux ailes 40 délimitent entre elles et avec la partie centrale 38, un petit alésage du support 36, dans lequel la portion d'extrémité amincie 33 de la vis 30 est reçue axialement coulissante.

De l'autre côté, vers la petite portion de tige 22, le support de ressort 37 comprend également, de part et d'autre de sa partie centrale à encoche 39, centrée sur l'axe A, deux ailes radiales opposées 41, mais celles-ci s'étendent transversalement au-delà des lumières latérales 28 de l'évidement 27 et font saillie dans le logement 6 du corps 1. De plus, ces ailes 41 délimitent sur le support 37 et avec la partie centrale à encoche 39 de ce dernier un petit alésage axial dans lequel est retenue une partie d'extrémité d'une goupille élastique de positionnement 42, engagée à coulissement axial dans un alésage central percé au travers de la petite portion de tige 22 et de l'extrémité adjacente de la portion de tige 19.

Ainsi, les supports de ressort 36 et 37 sont sollicités élastiquement par le ressort à lame 35, précontraint en flambage et donc bombé, qui tend à les écarter l'un de l'autre, et les ailes 41 du support 37 constituent des butées mobiles que le ressort 35 repousse, d'une part, contre ou vers l'épaulement 8 du corps 1, formant la butée fixe du corps 1 limitant les déplacement axiaux du support de ressort 37 vis-à-vis du corps 1, et, d'autre part, contre ou vers la face d'extrémité axiale 43 de l'évidement 27, du côté de l'embout 4 du corps 1, cette face 43 constituant une butée sur la tige 2 qui limite les déplacements axiaux du support 37 par rapport à la tige 2.

L'autre support 36 est repoussé par le ressort 35 de sorte que ses ailes 40 sont en butée contre l'épaulement de raccordement de la portion amincie 33 au reste de la vis 30. Ainsi, cette dernière est également repoussée de sorte que l'écrou 34, dans lequel elle est vissée, est toujours repoussé contre ou vers la face d'extrémité 29 de l'évidement 27, cette face d'extrémité 29 formant une butée sur la tige 2 pour limiter les déplacements de l'écrou 34 et donc du support de ressort 36 par rapport à la tige 2. De plus, l'écrou 34 comporte également des ailes latérales opposées 44, s'étendant transversalement au-delà des lumières latérales 28 du logement 27, et faisant ainsi saillie dans le logement 6 du corps 1. Par l'effet du ressort 35 et de l'appui du support 36 sur la vis 30, ces ailes 44 du support 34 sont repoussées vers l'épaulement radial 14 du corps 1, et plus précisément vers ou contre une cale de réglage 44′, de forme annulaire, entourant la portion de tige 19, et engagée dans l'entrée du cylindre 3 et contre l'épaulement 14 du bouchon 11. Cette cale de réglage 44′ est d'une épaisseur ajustée pour compenser, au montage, la distance axiale entre l'épaulement 14 du bouchon 11 du corps 1 et la face d'extrémité 29 de l'évidement 27 de la tige 2.

Ainsi les faces d'extrémité 29 et 43 de l'évidement 27, ainsi que l'épaulement radial entre la portion amincie 33 et le reste de la vis 30 constituent des butées portées par la tige 2 pour limiter les déplacements axiaux des supports de ressort 36 et 37 et de l'écrou 34 vis-à-vis de la tige 2. Dans une variante, c'est la face d'extrémité, tournée vers le support 36, sur la portion amincie 33 de la vis 30 qui peut servir de butée limitant la course du support 36 vis-à-vis de la vis 30 et contre laquelle le support 36 est repoussé par le ressort 35. Dans les deux cas, le support 36 et l'écrou 34 sont solidaires en translation axiale vis-à-vis de la tige 2 du corps 1, et les ailes 44 de l'écrou 34 constituent des butées mobiles repoussées vers ou contre la cale de réglage 44′ elle-même en appui contre la butée fixe du corps 1 formée par l'épaulement 14. Ces ailes 44 de l'écrou 34 guident le support 36 axialement dans l'évidement 27 et dans le logement 6 lors des mouvements relatifs entre la tige 2 et le corps 1, comme expliqué ci-dessous. De manière similaire, l'autre support 37 est guidé axialement par ses ailes 41 dans l'évidement 27 et dans le logement 6, ainsi que par la goupille élastique 42 dans la petite portion de tige 22.

Dans ce montage, on comprend que la vis 30 constitue une vis de réglage de la précontrainte du ressort à lame 35, bombé entre ses supports 36 et 37. En effet, le réglage de la position axiale de la vis 30 par rapport à l'écrou 34 permet de régler la position axiale du support 36 par rapport à l'écrou 34, et donc d'éloigner ou de rapprocher l'un de l'autre les supports 36 et 37, ce qui fait varier la valeur de la précontraînte de flambage du ressort à lame 35, qui correspond au seuil dynamométrique de manoeuvre de la bielle.

La bielle à contact comprend enfin un micro-contacteur ou interrupteur ou commutateur électrique 45, logé dans l'évidement 27 de la tige 2 et fixé à cette dernière. Ce micro-contacteur 45, de structure classique connue, comprend un boîtier 46 renfermant des bornes de contact et au moins un rupteur mobile, qui est normalement appliqué élastiquement contre les bornes afin de fermer un circuit électrique connecté à ces bornes. Le ou les rupteurs sont écartés des bornes, à l'encontre des moyens élastiques qui les sollicitent dans le boîtier 46, afin d'ouvrir le circuit électrique, par le basculement d'un bras 47, faisant saillie hors du boîtier 46 sur lequel ce bras 47 est monté pivotant.

Le boîtier 46 du micro-contacteur 45 est suspendu dans l'évidement 27 par deux vis 48 transversales, dont les têtes bombées 49 sont retenues dans un lamage 50 usiné dans la face externe de la portion de tige 19, les tiges des vis 48 traversant parallèlement l'une à l'autre le fond de ce lamage 50, le boîtier 46, deux entretoises 51 de calage du boîtier 46, situées de part et d'autre de ce boîtier et entre ce dernier et les côtés opposés de l'évidement 27, et enfin le fond d'un autre lamage 52, également usiné dans la face externe de la portion de tige 19, symétriquement au lamage 50 par rapport au plan diamétral de l'évidement 27, et dans lequel deux écrous 53 sont chacun vissés sur l'extrémité filetée de la tige de l'une des deux vis 48 (voir figure 3). Les vis 48 de support du boîtier 46 sont perpendiculaires au plan diamétral de l'évidement 27, et le boîtier 46 est disposé de sorte que son bras pivotant 47 s'étende axialement dans l'évidement 27 (voir figure 1). L'extrémité de ce bras 47 porte une platine axiale 54, percée d'un alésage taraudé et radial dans lequel est vissée, en position réglable radialement, la tige d'une vis 55 dont la tête est en contact contre la face concave du milieu de la lame-ressort 35. Cette vis 55 constitue un organe de contact mobile, à course d'actionnement déterminée, dont le déplacement sensiblement radial provoque le basculement du levier 47 pour actionner le micro-contacteur 45, et ouvrir le circuit électrique auquel ce contacteur est connecté. L'extrémité libre de la tige de la vis 55 présente un embout 56 fendu diamétralement pour permettre l'entraînement en rotation de la vis dans un sens ou dans l'autre autour de son axe afin de régler la position radiale de la vis 55 par rapport à la platine 54, et donc la position radiale du contact entre la vis 55 et la lame-ressort 35, à l'aide d'un tournevis introduit dans l'évidement 27 par une ouverture 57 percée dans la paroi du cylindre 3 et obturée, après réglage, par un bouchon amovible 58 en matière plastique et encliqueté dans l'ouverture 57.

Les bornes du micro-contacteur 45 sont raccordées à un circuit électrique du pilote automatique, qui est externe à la bielle, par des fils conducteurs (non représentés) qui les connectent aux bornes (non représentées) d'un connecteur 59 à embase 60 vissée sur la face externe d'une portion surépaissie du cylindre 3. Le branchement électrique de la bielle à contact s'effectue ainsi directement au niveau du connecteur 59.

Enfin, pour immobiliser en rotation la tige 2 par rapport au corps 1 par la petite portion de tige 22 dans le contre alésage 7 du corps 1, il peut être prévu une goupille élastique 61 (voir figure 2) logée dans un perçage transversal ménagé dans le fond du cylindre 3, et représenté en pointillé sur la figure 1, laissant cependant le libre débattement axial de la portion de tige 22 dans le contre-alésage 7 du corps 1.

La bielle à contact, dont la structure vient d'être décrite en référence aux figures 1 à 3, fonctionne de la manière suivante. La position initiale, représentée sur les figures 1 et 2, est une position d'équilibre, sous l'effet du ressort à lame 35 précontraint en compression, dans laquelle, d'une part, le support de ressort 37 est repoussé par le ressort 35 simultanément contre la butée formée sur la tige 2 par l'extrémité axiale de l'évidement 27 et contre la butée formée sur le corps 1 par l'épaulement 8, et, d'autre part, le support de ressort 36 est repoussé par le ressort 35 contre la butée d'appui sur la vis 30 de sorte que l'écrou 34 est simultanément repoussé contre la butée formée sur la tige par l'extrémité axialement 29 de l'évidedement 27 et la butée formée sur le corps par l'épaulement 14 du bouchon 11, par l'intermédiaire de la cale de réglage d'épaisseur 44′. La valeur de seuil dynamométrique de manoeuvre, ou de la précontrainte initiale du ressort 35, a été réglée par la manoeuvre de la vis 30, et correspond, par exemple, à une valeur de 10 daN. Lorsque la composante axiale d'un effort de compression ou de traction exercé sur la bielle ne dépasse pas cette valeur de seuil, le ressort 35 s'oppose à tout déplacement axial de la tige 2 par rapport au corps 1. Lorsque cette valeur de seuil est dépassée en compression, le ressort à lame 35 fléchit davantage et travaille en flambage sous l'effet de la compression qu'il subit entre son support 37, retenu contre l'épaulement 8 du corps 1, et son support 36, qui est rapproché du support 37, par le fait qu'il est déplacé avec la vis 30 et l'écrou 34 lui-même entraîné par la face de butée 29 de la tige 2. La tige 2 effectue ainsi sa course en compression dans le cylindre 1, cette course, d'une amplitude de 0,15 mm, étant achevée lorsque l'épaulement 20 de la tige vient en butée contre l'épaulement 9 du corps. Inversement, lorsque la valeur du seuil de précontrainte du ressort 35 est dépassée en traction, les ressort 35 est également davantage fléchi par flambage en compression entre son support 36 qui reste immobile car lié en mouvement à l'écrou 34 en butée contre la cale 44′, et le support 37 qui est rapproché du support 36 en étant entraîné avec la tige 2 par la surface de butée 43 sur cette dernière. La course en traction de 0,15 mm de la tige 2 par rapport au corps 1 est achevée lorsque l'épaulement 21 de la tige vient en butée contre l'épaulement 15 du couvercle 11 du corps 1. Donc, que la tige 2 soit déplacée en traction ou en compression sur toute sa course dans le corps 1, le ressort précontraint 35 est comprimé en flambage, et la flèche de sa partie centrale augmente, par rapport à la flèche initiale du ressort 35, d'une valeur amplifiée dans un rapport important par rapport à la course axiale de la tige dans le corps 1, en traction ou en compression. Dans cet exemple, la variation de la flèche de la partie centrale du ressort 35 est de l'ordre de 1 mm, ce qui signifie que la vis 55 est déplacée sensiblement radialement sur une course de 1 mm, et que le bras 47 est pivoté sur une amplitude suffisante pour actionner le micro-contacteur électrique 45. Avantageusement, on règlera le micro-contacteur 45 et la position radiale de la vis 55 par rapport à la platine 54 du levier pivotant 47 de sorte que la course différentielle de déclenchement du micro-contacteur 45 se situe dans la zone optimale de la course radiale du contact mobile d'actionnement 55. En d'autres termes, la course radiale de ce contact mobile d'actionnement 55 correspondra à une course d'approche, suivie d'une course de déclenchement effectif du micro-contacteur 45, suivie enfin d'une course de sécurité, l'amplitude de la course de déclenchement effectif du micro-contacteur pouvant être de l'ordre de 0,12 mm. On est ainsi assuré de l'actionnement du micro-contacteur 45, dès que la tige 2 a parcouru toute sa course en traction ou en compression dans le corps 1, après que la bielle a été soumise à une sollicitation, dont la composante axiale a dépassé le seuil de précontrainte du ressort 35.

La bielle à contact ci-dessus décrite se distingue des dispositifs analogues de l'état de la technique par le fait que l'amplification du déplacement nécessaire pour commander le micro-contacteur 45 est directement obtenue au niveau d'un unique ressort à lame 35, lequel est précontraint et constitue simultanément le détecteur de dépassement du seuil dynamométrique de manoeuvre de la bielle, en traction comme en compression. Le micro-contacteur 45 est commandé directement par le déplacement du milieu de la lame-ressort 35 qui travaille en flambage. Cette disposition permet d'obtenir une grande amplification du déplacement, qui est fonction de la flèche de flambage initial. De plus, la charge de précontraînte varie très peu en fonction de la flèche de flambage initial. Dans l'exemple d'application précité, l'amplification du déplacement est de l'ordre de 7, et la variation d'effort, sous une flèche de 0,15 mm, est pratiquement négligeable, et de l'ordre de 0,08 daN sur une charge initiale de 10 daN.

Par rapport aux bielles à contact de l'état de la technique, on constate que la bielle proposée ci-dessus ne comporte qu'un faible nombre de pièces, ne requiert qu'un réglage simplifié, et présente une grande fiabilité. Il en résulte également que le coût de réalisation d'une telle bielle à contact peut être considérablement réduit par rapport à celui des bielles à contact antérieures.

## Revendications

1. Bielle à contact, pour commandes de vol d'aérodynes et notamment d'hélicoptères, destinée à assurer la commande mécanique de l'actionnement d'au moins un contacteur électrique (45), au-delà d'un seuil dynamométrique de manoeuvre, et comprenant:
un corps de bielle (1) comportant une partie (3) essentiellement tubulaire, et dont une extrémité (4) présente des moyens de liaison et d'articulation à un support,
au moins un contacteur électrique (45), logé dans le corps de bielle (1) et muni d'au moins un organe de contact mobile (55) à course d'actionnement déterminée,
une tige de bielle (2), déplaçable axialement par rapport au corps (1) par une partie de tige (16) qui est engagée et montée coulissante dans ladite partie tubulaire (3) du corps (1) sur une course axiale inférieure à la course d'actionnement de l'organe de contact mobile (55) du contacteur (45) et délimitée entre deux butées mécaniques (9, 15) du corps (1), l'extrémité de la tige (2) externe au corps (1) présentant également des moyens (18) de liaison et d'articulation à un support,
un détecteur de dépassement du seuil dynamométrique de manoeuvre, qui comporte, dans le corps de bielle (1), au moins un ressort précontraint (35) sollicitant élastiquement la tige (2) et n'autorisant le déplacement de la tige (2) par rapport au corps (1) que lorsque la tige (2) est soumise, à l'encontre du ressort (35) à une sollicitation dont la composante axiale en traction ou en compression dépasse ledit seuil, et
un amplificateur mécanique de la course de la tige (2) par rapport au corps (1), ledit amplificateur étant actionné par la tige (2) et actionnant lui-même ledit organe de contact mobile (55) du contacteur (45) sur ladite course d'actionnement déterminé, lorsque la tige (2) est déplacée par rapport au corps (1) sur toute sa course en traction ou en compression, afin d'actionner le contacteur électrique (45),
caractérisée en ce qu'un organe constitue simultanément l'amplificateur de course et le détecteur de dépassement du seuil dynamométrique de manoeuvre, ledit organe étant un ressort à lame (35) travaillant en flambage de compression, et dont chacune des deux extrémités prend appui contre un support de ressort (36, 37), qui est monté coulissant axialement vis-à-vis, d'une part, du corps de bielle (1), et, d'autre part, de la tige de bielle (2), et qui est repoussé par le ressort à lame (35) précontraint en compression directement ou indirectement contre l'une au moins de deux butées, dont l'une est une butée du corps (8; 14,44') et l'autre une butée de la tige (29, 43), de sorte que tout déplacement axial de la tige (2) par rapport au corps (1), en compression ou en traction, provoque une compression du ressort à lame (35) entre en support de ressort (36 ou 37) en appui contre une butée du corps et l'autre support de ressort en appui contre une butée de la tige.

2. Bielle à contact selon la revendication 1, caractérisée en ce que ledit organe de contact mobile (55) du contacteur (45) est directement en contact et actionné par la partie centrale dudit ressort à lame (35).

3. Bielle à contact selon l'une des revendications 1 et 2, caractérisée en ce que chaque support de ressort (36, 37) comprend une partie (38, 39) munie d'une encoche en V dans laquelle est engagée et prend appui l'extrémité correspondante du ressort à lame (35), et qui est solidaire en translation axiale d'au moins une aile transversale (41, 44) s'étendant sensiblement radialement par rapport à la partie (38, 39) munie de l'encoche, et formant une butée mobile coopérant avec les butées correspondantes du corps (1) et de la tige (2) pour respectivement limiter le déplacement du support de ressort (36, 37) dans le corps (1) ou l'entraîner avec la tige (2) dans le corps (1).

4. Bielle à contact selon l'une des revendications 1 à 3, caractérisée en ce que ledit ressort à lame (35) est logé sensiblement axialement dans un évidement (27) ménagé dans ladite partie de tige (16) montée coulissante dans le corps de bielle (1).

5. Bielle à contact selon la revendication 4, caractérisée en ce que ledit évidement (27) de la tige (2) est ménagé dans une portion (19) de plus grande section transversale, qui est délimitée axialement entre deux épaulements radiaux (20, 21) de la tige et qui coulisse dans un logement (6) interne à ladite partie tubulaire (3) du corps (1) et délimité axialement entre deux épaulements (9, 15) radiaux et internes du corps (1) qui constituent lesdites butées mécaniques du corps limitant les déplacements axiaux de la tige par rapport au corps par contact avec lesdits épaulements (20, 21) de la tige (2).

6. Bielle à contact selon l'une des revendications 4 et 5, caractérisée en ce que chaque support de ressort (36, 37) est guidé à coulissement axial dans l'une respectivement des deux parties d'extrémité axiale de l'évidement (27) de la tige (2).

7. Bielle à contact selon la revendication 6, telle que rattachée à la revendication 3, caractérisée en ce que ledit évidement (27) s'étend transversalement dans la tige (2) et débouche radialement dans ledit logement (6) du corps (1) par au moins une lumière (28) allongée en direction axiale, et de préférence par deux lumières (28) opposées de part et d'autre de l'axe (A) de la bielle, chaque support de ressort (36, 37) étant solidaire en translation d'au moins une aile radiale (41, 44), mais de préférence de 2 ailes radiales opposées, dont l'extrémité radiale externe fait saillie, au-delà d'une lumière (28) correspondante, dans le logement (6) du corps (1) pour former ladite butée mobile correspondante coopérant avec un autre épaulement (8, 14) interne au corps (1) ou une cale (44′) d'épaisseur ajustée, en appui contre cet autre épaulement (14), formant ladite butée correspondante du corps (1), pour limiter le déplacement dudit support de ressort (36, 37), tandis que l'une au moins des extrémités axiales (29, 43) de l'évidement (27) forme ladite butée correspondante de la tige (2) qui coopère avec ladite butée mobile, pour l'entraînement dudit support de ressort (36, 37) avec la tige (2) dans le corps (1).

8. Bielle à contact selon la revendication 7, caractérisée en ce que les épaulements (14, 15) radiaux et internes du corps (1), qui constituent les butées du corps limitant les déplacements respectivement de la tige (2) et, avec interposition éventuelle d'une cale (44') d'épaisseur ajustée, d'un support de ressort (36) vers l'extérieur du corps (1), du côté des moyens (18) de liaison et d'articulation de la tige (2), sont formés par des épaulements en gradin (14, 15) dans un bouchon annulaire (11) d'arrêt et de fermeture d'une extrémité axiale d'un cylindre (3) du corps (1), qui constitue l'essentiel de ladite partie tubulaire du corps.

9. Bielle à contact selon l'une des revendications 7 et 8, caractérisée en ce que le support de ressort (37), solidaire en translation de la butée mobile (41) coopérant avec une butée de tige (43) formée par une extrémité axiale de l'évidement (27), est guidé en translation axiale par rapport à la tige (2) par au moins une goupille élastique (42) qui est solidaire dudit support de ressort (37) et de préférence de sa partie centrale (39) munie de ladite encoche en V, et qui est logée et montée coulissante axialement dans un alésage axial percé dans la tige (22).

10. Bielle à contact selon la revendication 9, caractérisée en ce que ledit support de ressort (37) a sa partie (39) munie d'une encoche en V qui est centrale et d'une seule pièce avec deux ailes transversales opposées (41), avec lesquelles la partie (39) munie d'une encoche délimite un petit alésage axial dans lequel est logée une extrémité de la goupille élastique (42).

11. Bielle à contact selon l'une des revendications 1 à 10, caractérisée en ce qu'elle comprend des moyens (30, 34) de réglage de la précontrainte du ressort à lame (35), lesdits moyens de réglage assurant un positionnement axial réglable de l'un au moins des supports de ressort (36) par rapport à la tige (2).

12. Bielle à contact selon la revendication 11, caractérisée en ce que lesdits moyens de réglage comprennent au moins un premier organe (30), qui est fileté et vissé en position réglable axialement par rapport à la tige (2), et au moins un second organe (33) qui est déplacé axialement par un premier organe fileté (30) et qui présente, d'une part, une portion axiale sur laquelle un support de ressort (36) est monté axialement coulissant et, d'autre part, une butée d'appui dudit support de ressort (36), ladite butée d'appui constituant ladite butée de la tige vers laquelle le ressort (35) repousse ledit support de ressort (36).

13. Bielle à contact selon la revendication 12, telle que rattachée à la revendication 6, caractérisée en ce que ledit organe fileté est une vis (30) dont la tige filetée est vissée dans un écrou de réglage (34) disposé dans une partie d'extrémité axiale de l'évidement (27) de ladite tige (2) de bielle, et dont la tête de vis (31) est logée dans le fond d'un alésage axial traversant un manchon (23) prolongeant axialement la partie (19) de tige de bielle montée coulissante dans le corps (1), ladite tête de vis (31) étant accessible de l'extérieur de la bielle par l'intérieur dudit manchon (23) pour être entraînée en rotation dans l'un ou l'autre sens afin de régler sa position axiale par rapport à la tige (2), et ledit second organe des moyens de réglage est constitué par une portion d'extrémité sensiblement cylindrique (33) et de section transversale réduite de la tige de vis (30), qui fait saillie axialement dans l'évidement (27) de la tige de bielle (2), et qui forme ladite portion axiale engagée à coulissement dans un alésage dudit support de ressort (36), ladite butée d'appui étant formée par la face d'extrémité libre de ladite portion d'extrémité de section réduite (33) ou par un épaulement de raccordement de cette dernière au reste de la tige de vis (30), de sorte que le ressort à lame (35) repousse ledit support (36) contre ladite butée d'appui, ce qui repousse axialement ladite vis (30) dans un sens repoussant ledit écrou de réglage (34) vers ou contre l'extrémité axiale correspondante (29) de l'évidement (27) de la tige de bielle, ledit écrou (34) comportant deux ailes transversales opposées (44) faisant saillie radialement hors de l'évidement (27) de la tige de bielle et dans le logement (6) du corps de bielle (1) afin d'être repoussées vers ou contre la butée correspondante (14) du corps (1), limitant d'un côté les déplacements du support de ressort (36) correspondant, ou une cale (44′) d'épaisseur ajustée, appliquée contre cette butée du corps (14).

14. Bielle à contact selon la revendication 13, caractérisée en ce que la tige de bielle (2) comprend également un embout (17) fileté sur une partie d'extrémité (24) qui est engagée et vissée en position axiale réglable dans ledit manchon (23), et dont l'autre partie d'extrémité est en saillie hors du corps (1) et porte lesdits moyens (18) de liaison et d'accouplement de la tige de bielle (2).

15. Bielle à contact selon l'une des revendications 5 à 14, telle que rattachée à la revendication 4, caractérisée en ce que le contacteur électrique (45) est logé dans l'évidement (27) de la tige de bielle (2) et fixé à cette dernière, et son organe de contact mobile (55) à course d'actionnement déterminée est un organe en contact contre la face concave du ressort à lame (35) et supporté en position radiale réglable par un levier (47, 54) s'étendant sensiblement axialement dans l'évidement (27) et monté pivotant sur le contacteur (45) pour l'actionner.

## Claims

1. A contact link for flight controls of aerodynes, especially helicopters, which is intended for ensuring the mechanical control of the actuation of at least one electrical contactor (45) beyond a dynamometric operating threshold and which comprises:
a link body (1) which comprises an essentially tubular part (3) and one end (4) of which has means for connection to and articulation on a support,
at least one electrical contactor (45) accommodated in the link body (1) and equipped with at least one movable contact member (55) of specific actuating stroke,
a link rod (2) shiftable axially relative to the body (1) by means of a rod part (16) which is engaged and mounted slideably in said tubular part (3) of the body (1), over an axial stroke less than the actuating stroke of the movable contact member (55) of the contactor (45) and delimited between two mechanical stops (9, 15) of the body (1) , the end of the rod (2) outside the body (1) likewise having means (18) for connection to and articulation on a support,
a detector for detecting the exceeding of the dynamometric operating threshold, which, in the link body (1) comprises at least one prestressed spring (35) stressing the rod (2) elastically and allowing the shifting of the rod (2) relative to the body (1) only when the rod (2) is subjected, counter to the spring (35) to a stress of which the axial component under tension or compression exceeds said threshold, and
a mechanical amplifier of the stroke of the rod (2) relative to the body (1), said amplifier being actuated by the rod (2) and itself actuating said movable contact member (55) of the contactor (45) over said specific actuating stroke when the rod (2) is shifted relative to the body (1) over its entire stroke under tension or compression, in order to actuate the electrical contactor (45),
characterized in that one member forms at the same time the stroke amplifier and the detector for detecting the exceeding of the dynamometric operating threshold, said member being a leaf spring (35) which works by compressive buckling and each of the two ends of which bears against a spring support (36, 37) which is mounted axially slideably relative to the link body (1) on the one hand and relative to the link rod (2) on the other hand and which is pushed by the leaf spring (35) subjected to compressive prestress directly or indirectly up against at least one of the two stops, of which one is a stop of the body (8; 14,44') and the other a stop of the rod (29, 43), so that any axial shift of the rod (2) relative to the body (1) under compression or tension causes a compression of the leaf spring (35) between one spring support (36 or 37) bearing against a stop of the body and the other spring support bearing against a stop of the rod.

2. A contact link as claimed in claim 1, characterized in that said movable contact member (55) of the contactor (45) is directly in contact with and actuated by the central part of said leaf spring (35).

3. A contact link as claimed in one of claims 1 and 2, characterized in that each spring support (36, 37) comprises a part (38, 39) which is equipped with a V-shaped notch, in which the corresponding end of the leaf spring (35) is engaged and bears, and which is fixed in terms of axial translational motion relative to at least one transverse wing (41, 44) extending substantially radially relative to the part (38, 39) equipped with the notch, and forming a movable stop interacting with the corresponding stops of the body (1) and of the rod (2) in order respectively to limit the shift of the spring support (36, 37) in the body (1) or drive it together with the rod (2) in the body (1).

4. A contact link as claimed in one of claims 1 to 3, characterized in that said leaf spring (35) is accommodated substantially axially in a recess (27) made in said rod part (16) mounted slideably in the link body (1).

5. A contact link as claimed in claim 4, characterized in that said recess (27) of the rod (2) is made in a portion (19) of larger cross-section which is delimited axially between two radial shoulders (20, 21) of the rod and which slides in a receptacle (6) situated within said tubular part (3) of the body (1) and delimited axially between two inner radial shoulders (9, 15) of the body (1) which form said mechanical stops of the body limiting the axial shifts of the rod relative to the body as a result of contact with said shoulders (20, 21) of the rod (2).

6. A contact link as claimed in one of claims 4 and 5, characterized in that each spring support (36, 37) is guided axially slideably in a respective one of the two axial end parts of the recess (27) of the rod (2).

7. A contact link as claimed in claim 6, in conjunction with claim 3, characterized in that said recess (27) extends transversally in the rod (2) and opens radially into said receptacle (6) of the body (1) via at least one axially elongate slot (28), preferably via two opposing slots (28) on either side of the axis (A) of the link, each spring support (36, 37) being fixed in terms of translational motion relative to at least one radial wing (41, 44), but preferably two opposing radial wings, the outer radial end of which projects beyond a corresponding slot (28) into the receptacle (6) of the body (1), to form said corresponding movable stop interacting with another shoulder (8, 14) within the body (1) or a shim (44') of set thickness bearing against this other shoulder (14), forming said corresponding stop of the body (1), to limit the shift of said spring support (36, 37),whilst at least one of the axial ends (29, 43) of the recess (27) forms said corresponding stop of the rod (2) which interacts with said movable stop in order to drive said spring support (36, 37) together with the rod (2) in the body (1).

8. A contact link as claimed in claim 7, characterized in that the inner radial shoulders (14, 15) of the body (1) which form the stops of the body limiting respective shifts of the rod (2) and, if appropriate with a shim (44') of set thickness interposed, of a spring support (36) towards the outside of the body (1), on the same side as the means (18) of connection and articulation of the rod (2), are formed by stepped shoulders (14, 15) in an annular detent plug (11) for closing one axial end of a cylinder (3) of the body (1) which essentially forms said tubular part of the body.

9. A contact link as claimed in one of claims 7 and 8, characterized in that the spring support (37) fixed in terms of translational motion relative to the movable stop (41) interacting with a rod stop (43) formed by one axial end of the recess (27) is guided in terms of axial translational motion relative to the rod (2) by means of at least one elastic pin (42) which is fixed to said spring support (37), preferably to its central part (39) equipped with said V-shaped notch, and which is seated and mounted axially slideably in an axial bore made in the rod (22).

10. A contact link as claimed in claim 9, characterized in that said spring support (37) has its part (39) equipped with a V-shaped notch central and in one piece with two opposing transverse wings (41), together with which the part (39) equipped with a notch delimits a small axial bore, in which one end of the elastic pin (42) is seated.

11. A contact link as claimed in one of claims 1 and 10, characterized in that it comprises means (30, 34) for adjusting the prestress of the leaf spring (35), said means of adjustment ensuring an adjustable axial positioning of at least one of the spring supports (36) relative to the rod (2).

12. A contact link as claimed in claim 11, characterized i that that said means of adjustment comprise at least one first member (30) which is threaded and screwed in a position axially adjustable relative to the rod (2), and at least one second member (33) which is shifted axially by means of a first threaded member (30) and which has, on the one hand, an axial portion, on which a spring support (36) is mounted axially slideably, and, on the other hand, a bearing stop of said spring support (36), said bearing stop forming said stop of the rod, towards which the spring (35) pushes said spring support (36).

13. A contact link as claimed in claim 12, in conjunction with claim 6, characterized in that said threaded member is a screw (30), the threaded shank of which is screwed into an adjusting nut (34) arranged in an axial end part of the recess (27) of said link rod (2) and the screw head (31) of which is seated in the bottom of an axial bore passing through a sleeve (23) axially extending the link-rod part (19) mounted slideably in the body (1), said screw head (31) being accessible from outside the link via the interior of said sleeve (23) so as to be driven in rotation in one direction or the other, in order to adjust its axial position relative to the rod (2), and said second member of the means of adjustment is formed by a substantially cylindrical end portion (33) of reduced cross-section of the screw shank (30), which projects axially into the recess (27) of the link rod (2) and which forms said axial portion engaged slideably in a bore to said spring support (36), said bearing stop being formed by the free end face of said end portion of reduced cross-section (33) or by a shoulder connecting the latter to the rest of the screw shank (30), so that the leaf spring (35) pushes said support (36) up against said bearing stop, thus pushing said screw (30) axially in a direction pushing said adjusting nut (34) towards or up against the corresponding axial end (29) of the recess (27) of the link rod, said nut (34) having two opposing transverse wings (44) projecting radially out of the recess (27) of the link rod and into the receptacle (6) of the link body (1), in order to be pushed towards or up against the corresponding stop (14) of the body (1), limiting on one side the shifts of the corresponding spring support (36), or a shim (44') of set thickness laid against this stop of the body (14).

14. A contact link as claimed in claim 13, characterized in that the link rod (2) also comprises an endpiece (17) which is threaded on one end part (24) engaged and screwed in an adjustable axial position in said sleeve (23) and the other end part of which projects out of the body (1) and carries said means (18) of connection and coupling of the link rod (2).

15. A contact link as claimed in one of claims 5 to 14 in conjunction with claim 4, characterized in that the electrical contactor (45) is accommodated in the recess (27) of the link rod (2) and is fastened to the latter, and its movable contact member (55) of specific actuating stroke is a member in contact against the concave face of the leaf spring (35) and supported in an adjustable radial position by a lever (47, 54) extending substantially axially in the recess (27) and mounted pivotably on the contactor (45) in order to actuate it.

## Patentansprüche

1. Kupplungsstange mit Kontakt für Flugsteuerungen von Luftfahrzeugen, insbesondere von Hubschraubern, die dazu bestimmt ist, die mechanische Steuerung der Betätigung wenigstens eines elektrischen Schalters (45) jenseits einer dynamometrischen Betätigungsschwelle sicherzustellen, mit
einem Kupplungsstangenkörper (1), der einen im wesentlichen röhrenförmigen Teil (3) besitzt und dessen eines Ende (4) Mittel für eine Gelenkverbindung mit einem Träger aufweist,
wenigstens einem elektrischen Schalter (45), der in dem Kupplungsstangenkörper (1) untergebracht und mit wenigstens einem beweglichen Kontaktelement (55) mit festgelegtem Betätigungsweg versehen ist,
einer Stange (2), die bezüglich des Körpers (1) über einen Stangenteil (16) axial verschiebbar ist, der in dem röhrenförmigen Teil (3) des Körpers (1) über einen axialen Weg hinweg verschiebbar eingesetzt und angeordnet ist, der kürzer als der Betätigungsweg des beweglichen Kontaktelements (55) des Schalters (45) ist und durch zwei mechanische Anschläge (9, 15) des Körpers (1), zwischen denen er liegt, begrenzt ist, wobei das außerhalb des Körpers (1) liegende Ende der Stange (2) wiederum mit Mitteln (18) für eine Gelenkverbindung mit einem Träger versehen ist,
einem Detektor für das überschreiten der dynamometrischen Betätigungsschwelle, der in dem Kupplungsstangenkörper (1) wenigstens eine vorgespannte Feder (35) aufweist, die die Stange (2) elastisch belastet und die Verschiebung der Stange (2) bezüglich des Körpers (1) nur dann zuläßt, wenn die Stange (2) entgegen der Feder (35) einer Belastung ausgesetzt ist, deren axiale Zug- oder Druckkomponente die Schwelle überschreitet, und
einem mechanischen Verstärker für den Lauf der Stange (2) bezüglich des Körpers (1), wobei der Verstärker durch die Stange (2) betätigt wird und selbst das bewegliche Kontaktelement (55) des Schalters (45) auf dem festgelegten Betätigungsweg betätigt, wenn die Stange (2) bezüglich des Körpers (1) über ihren gesamten Zug- oder Druckweg verschoben ist, um den elektrischen Schalter (45) zu betätigen,
dadurch gekennzeichnet, daß ein Organ gleichzeitig den Laufverstärker und den Detektor für das überschreiten der dynamometrischen Betätigungsschwelle bildet, wobei dieses Organ eine Blattfeder (35) ist, die so arbeitet, daß sie auf Druck gebogen wird und deren beide Enden sich jeweils an einem Federträger (36, 37) abstützen, der einerseits gegenüber dem Kupplungsstangenkörper (1) und andererseits gegenüber der Stange (2) axial verschiebbar angebracht ist und der durch die auf Druck vorgespannte Blattfeder unmittelbar oder indirekt gegen zumindest einen der beiden Anschläge zurückgestoßen wird, von denen der eine ein Anschlag (8; 14, 44') des Körpers und der andere ein Anschlag (29, 43) der Stange ist, so daß jede, auf Druck oder Zug zurückgehende axiale Verschiebung der Stange (2) relativ zu dem Körper (1) eine Kompression der Blattfeder (35) zwischen einem an einem Anschlag des Körpers abgestützten Federträger (36 oder 37) und dem anderen, an einem Anschlag der Stange abgestützten Federträger bewirkt.

2. Kupplungsstange mit Kontakt nach Anspruch 1, dadurch gekennzeichnet, daß das bewegliche Kontaktelement (55) des Schalters (45) mit dem zentralen Teil der Blattfeder (35) unmittelbar in Kontakt steht und durch diesen betätigt wird.

3. Kupplungsstange mit Kontakt nach einem der Ansprüche 1 und 2, dadurch gekennzeichnet, daß jeder Federträger (36, 37) einen Teil (38, 39) aufweist, der mit einem V-förmigen Einschnitt versehen ist, in dem das entsprechende Ende der Blattfeder (35) eingesetzt ist und sich abstützt, und der bezüglich einer Axialverschiebung mit wenigstens einem Querflügel (41, 44) fest verbunden ist, der sich bezüglich des den Einschnitt aufweisenden Teils (38, 39) im wesentlichen radial erstreckt, und einen beweglichen Anschlag bildet, der mit den entsprechenden Anschlägen des Körpers (1) und der Stange (2) zusammenwirkt, um die Verschiebung des Federträgers (36, 37) in dem Körper (1) zu begrenzen bzw. diesen mit der Stange (2) in dem Körper (1) mitzunehmen.

4. Kupplungsstange mit Kontakt nach einem der Ansprüche 1 bis 3, dadurch gekennnzeichnet, daß die Blattfeder (35) im wesentlichen axial in einer Ausnehmung (27) des Stangenteils (16) untergebracht ist, der verschiebbar in dem Kupplungsstangenkörper (1) angebracht ist.

5. Kupplungsstange mit Kontakt nach Anspruch 4, dadurch gekennzeichnet, daß die Ausnehmung (27) der Stange (2) in einem Abschnitt (19) größeren Querschnitts ausgebildet ist, der axial durch zwei radiale Schultern (20, 21) der Stange begrenzt ist und in einer Aufnahme (6) innerhalb des röhrenförmigen Teils (3) des Körpers (1) verschiebbar ist und axial durch zwei radiale Schultern (9, 15) innerhalb des Körpers (1) begrenzt ist, die die mechanischen Anschläge des Körpers bilden, die die axialen Verschiebungen der Stange bezüglich des Körpers durch den Kontakt mit den Schultern (20, 21) der Stange (2) begrenzen.

6. Kupplungsstange mit Kontakt nach einem der Ansprüche 4 und 5, dadurch gekennzeichnet, daß jeder Federträger (36, 37) in jeweils einem der beiden axialen Endabschnitte der Ausnehmung (27) der Stange (2) axial verschiebbar geführt ist.

7. Kupplungsstange mit Kontakt nach Anspruch 6 in Verbindung mit Anspruch 3, dadurch gekennzeichnet, daß die Ausnehmung (27) sich in der Stange (2) in Querrichtung erstreckt und über wenigstens einen sich in Axialrichtung erstreckenden Schlitz (28) und vorzugsweise über zwei auf entgegengesetzten Seiten der Achse (A) der Kupplungsstange liegende Schlitze (28) radial in die Aufnahme (6) des Körpers (1) mündet, wobei jeder Federträger (36, 37) bezüglich der Verschiebung mit zumindest einem radialen Flügel (41, 44), vorzugsweise jedoch mit zwei einander gegenüberliegenden radialen Flügeln fest verbunden ist, dessen äußeres, radiales Ende über einen entsprechenden Schlitz (28) hinaus in die Aufnahme (6) des Körpers (1) vorspringt, um den entsprechenden beweglichen Anschlag zu bilden, der mit einer weiteren Schulter (8, 14) innerhalb des Körpers (1) oder einer Einlage (44') angepaßter Stärke zusammenwirkt, die sich an dieser weiteren Schulter (14) abstützt, die den entsprechenden Anschlag des Körpers (1) bildet, um die Verschiebung des Federträgers (36, 37) zu begrenzen, während zumindest eines der axialen Enden (29, 43) der Ausnehmung (27) den entsprechenden Anschlag der Stange (2) bildet, der mit dem beweglichen Anschlag für eine Mitnahme des Federträgers (36, 37) mit der Stange (2) in dem Körper (1) zusammenwirkt.

8. Kupplungsstange mit Kontakt nach Anspruch 7, dadurch gekennzeichnet, daß die radialen und innerhalb des Körpers (1) liegenden Schultern (14, 15), die die Anschläge des Körpers bilden, die die Verschiebungen der Stange (2) bzw., gegebenenfalls unter Zwischenschaltung einer Einlage (44') angepaßter Stärke, eines Federträgers (36) in den Bereich außerhalb des Körpers (1) auf der Seite der Mittel (18) einer Gelenkverbindung mit der Stange (2) begrenzen, durch abgestufte Schultern (14, 15) in einem ringförmigen Sperr- und Abschlußteil (11) eines axialen Endes eines Zylinders (3) des Körpers (1) gebildet sind, der im wesentlichen den röhrenförmigen Teil des Körpers bildet.

9. Kupplungsstange mit Kontakt nach einem der Ansprüche 7 und 8, dadurch gekennzeichnet, daß der Federträger (37), der bezüglich der Verschiebung fest mit dem beweglichen Anschlag (41) verbunden ist, der mit einem Stangenanschlag (43) zusammenwirkt, der durch ein axiales Ende der Ausnehmung (27) gebildet ist, bezüglich der Stange (2) durch zumindest einen elastischen Stift (42) axial verschiebbar geführt ist, der mit dem Federträger (37) und vorzugsweise dessen zentralem, den V-förmigen Einschnitt aufweisenden Teil (39) fest verbunden ist, und der in einer Axialbohrung der Stange (22) axial verschiebbar aufgenommen und angeordnet ist.

10. Kupplungsstange mit Kontakt nach Anspruch 9, dadurch gekennzeichnet, daß der Teil (39) des Federträgers (37) mit einem V-förmigen Einschnitt versehen ist, der zentral angeordnet ist und aus einem einzigen Teil mit zwei einander gegenüberliegenden Querflügeln (41) besteht, mit denen der mit einem Einschnitt versehene Teil (39) eine kleine Axialbohrung begrenzt, in der ein Ende des elastischen Stiftes (42) aufgenommen ist.

11. Kupplungsstange mit Kontakt nach einem der Ansprüche 1 bis 10, dadurch gekennzeichnet, daß sie Mittel (30, 34) zur Einstellung der Vorspannung der Blattfeder (35) aufweist, die eine einstellbare axiale Positionierung wenigstens einer der Federträger (36) bezüglich der Stange (2) sicherstellen.

12. Kupplungsstange mit Kontakt nach Anspruch 11, dadurch gekennzeichnet, daß die Einstellmittel wenigstens ein erstes Organ (30) aufweisen, das mit einem Gewinde versehen und bezüglich der Stange (2) axial verstellbar in die jeweilige Position schraubbar ist, und wenigstens ein zweites Organ (33) aufweisen, das durch ein erstes, mit einem Gewinde versehenes Organ (30) axial verstellbar ist und einerseits einen axialen Abschnitt aufweist, auf dem ein Federträger (36) axial verschiebbar angebracht ist, und andererseits einen Anschlag zum Abstützen des Federträgers (36) besitzt, wobei dieser zur Abstützung dienende Anschlag den Anschlag der Stange bildet, gegen den die Feder (35) den Federträger (36) drückt.

13. Kupplungsstange nach Anspruch 12 in Verbindung mit Anspruch 6, dadurch gekennzeichnet, daß das mit einem Gewinde versehene Organ eine Schraube (30) ist, deren Gewindeschaft in eine Stellmutter (34) eingeschraubt ist, die in einem axialen Endabschnitt der Ausnehmung (27) der Stange (2) der Kupplungsstange angeordnet ist, und deren Schraubkopf (31) in dem Boden einer axialen Bohrung aufgenommen ist, die eine Hülse (23) durchdringt, die den Teil (19) der verschiebbar in dem Körper (1) angebrachten Kolbenstange axial verlängert, wobei der Schraubenkopf (31) vom Bereich außerhalb der Kupplungsstange aus durch das Innere der Hülse (23) zugänglich ist, um in der einen oder der anderen Richtung gedreht zu werden, um seine axiale Lage bezüglich der Stange (2) einzustellen, und daß das zweite Organ der Einstellmittel durch einen im wesentlichen zylindrischen, einen verringerten Querschnitt aufweisenden Endabschnitt (33) des Schraubenschaftes (30) gebildet ist, der axial in die Ausnehmung (27) der
Stange (2) vorspringt und den axialen Abschnitt bildet, der verschiebbar in eine Bohrung des Federträgers (36) eingesetzt ist, wobei der zur Abstützung dienende Anschlag durch die freie Endseite des Endabschnitts (33) verringerten Querschnitts oder durch eine diesen mit dem Rest des Schraubenschaftes (30) verbindende Schulter gebildet ist, so daß die Blattfeder (35) den Träger (36) gegen den zur Abstützung dienenden Anschlag drückt, wodurch die Schraube (30) in einer solchen Richtung zurückgedrängt wird, daß die Stellmutter (34) zum entsprechenden axialen Ende (29) der Ausnehmung (27) der Kolbenstange hin oder gegen dieses Ende gedrückt wird, wobei die Mutter (34) zwei einander entgegengesetzte Querflügel (44) aufweist, die radial aus der Ausnehmung (27) der Kolbenstange heraustreten und in die Aufnahme (6) des Kupplungsstangenkörpers (1) vorspringen, um zu dem entsprechenden Anschlag (14) des Körpers (1) hin oder gegen diesen Anschlag gedrückt zu werden, der auf einer Seite die Verschiebungen des entsprechenden Federträgers (36) begrenzt, oder zu einer Einlage (44') angepaßter Stärke hin oder gegen diese Einlage gedrückt zu werden, die an diesen Anschlag des Körpers (14) angelegt ist.

14. Kupplungsstange mit Kontakt nach Anspruch 13, dadurch gekennzeichnet, daß die Stange (2) auch ein Ansatzstück (17) aufweist, das an einem Endteil (24) mit einem Gewinde versehen ist, wobei dieser Endteil axial verstellbar in die Hülse (23) eingesetzt und in die jeweilige Position einschraubbar ist, und wobei der andere Endteil des Ansatzstücks aus dem Körper (1) heraustritt und die Verbindungs- und Kupplungsmittel (18) der Stange (2) trägt.

15. Kupplungsstange mit Kontakt nach einem der Ansprüche 5 bis 14 in Verbindung mit Anspruch 4, dadurch gekennzeichnet, daß der elektrische Schalter (45) in der Ausnehmung (27) der
Stange (2) aufgenommen und an dieser fixiert ist, und daß dessen beweglicher Kontakt (55) mit festgelegtem Betätigungsweg ein Organ ist, das mit der konkaven Seite der Blattfeder (35) in Kontakt steht und in einstellbarer radialer Lage von einem Hebel (47, 54) getragen ist, der sich im wesentlichen axial in der Ausnehmung (27) erstreckt und schwenkbar an dem Schalter (45) angebracht ist, um diesen zu betätigen.
